# EUROPÄISCHE PATENTANMELDUNG

(11) **EP 4 516 730 A1**
(43) Veröffentlichungstag der Anmeldung: **05.03.2025**
(21) Anmeldenummer: 23020417.4
(22) Anmeldetag: 04.09.2023
(51) Int. Cl.: C01B 3/48, C01B 3/50, B01D 53/047, B01D 53/14, B01D 53/22, C01B 3/52, C01B 3/34

(54) **VERFAHREN UND ANLAGE ZUR HERSTELLUNG VON EINES WASSERSTOFFREICHEN PRODUKTGASES**

(71) Anmelder: Linde GmbH, 82049 Pullach (DE)
(72) Erfinder: Maier, Alexander, 82049 Pullach (DE); Leitmayr, Werner, 82049 Pullach (DE)
(74) Vertreter: Fischer, Werner

(57) **Zusammenfassung**

Es wird ein Verfahren (100, 200) zur Herstellung eines wasserstoffreichen Produktgases (5) vorgeschlagen, bei dem ein Reaktionseinatz (1) unter Verwendung eines oder mehrerer Umsetzungsschritte (10, 20, 30) zu einem Synthesegas (3) umgesetzt wird, wobei das Synthesegas (3) oder ein Teil hiervon, oder ein Gasgemisch, das unter Einsatz einer Kohlendioxidabtrennung (50) aus dem Synthesegas (3) oder einem Teil hiervon gebildet wird, einer Druckwechseladsorption (40) unterworfen wird, wobei unter Verwendung der Druckwechseladsorption (40) das Produktgas (5) und ein Restgas (6) gebildet werden, und wobei das Restgas (6) oder ein Teil hiervon, oder ein Gasgemisch, das unter Verwendung einer Kohlendioxidabtrennung (50) aus dem Restgas (6) oder einem Teil hiervon gebildet wird, unter Erhalt eines Permeats (7) und eines Retentats (8) einer Membrantrennung (60) unterworfen wird. Eine entsprechende Anlage wird ebenfalls vorgeschlagen.

## Beschreibung

Die Erfindung betrifft ein Verfahren und eine Anlage zur Herstellung eines wasserstoffreichen Produktgases.

### Technischer Hintergrund

Unter blauem Wasserstoff versteht man Wasserstoff, der durch Umsetzung von kohlenstoffhaltigen Einsatzstoffen, insbesondere Erdgas, hergestellt wird. Im Gegensatz zu grauem Wasserstoff, dessen Herstellung ansonsten grundsätzlich in ähnlicher Weise erfolgt, wird bei der Herstellung von blauem Wasserstoff eine sogenannte Kohlendioxidabscheidung und -speicherung (engl. carbon (dioxide) capture and storage, CCS) vorgenommen. Das während des Herstellungsprozesses entstehende Kohlendioxid wird hierbei abgeschieden und dauerhaft, beispielsweise unterirdisch, gespeichert (verpresst) oder in anderer Weise verwendet. Hierdurch verringern sich die Kohlendioxidemissionen in die Atmosphäre deutlich.

Für die Herstellung von blauem Wasserstoff wird ein entsprechender Einsatzstoff mittels eines geeigeten Verfahrens wie partieller Oxidation, autothermer Reformierung oder Dampfreformierung zu einem wasserstoffhaltigen Synthesegas umgewandelt. Dessen Wasserstoffgehalt kann insbesondere durch Umsetzung von Kohlenmonoxid mittels Wassergasshift (WGS) zu Kohlendioxid und Wasserstoff erhöht werden. Beide Verfahrensschritte werden vorliegend auch als "Umsetzungsschritte" bezeichnet. Das erhaltene, wasserstoffhaltige Synthesegas wird dann mittels chemischer Wäsche, physikalischer Wäsche oder mit Hilfe von adsorptiven Verfahren weitestgehend (d.h. zu typischerweise mehr als 98%) von Kohlendioxid befreit.

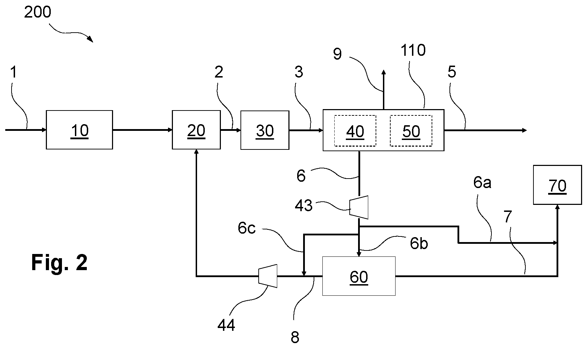

Entsprechende Verfahren sind vielfach in der Literatur beschrieben. Statt vieler sei beispielsweise auf den Artikel von A.O. Oni et al., "Comparative assessment of blue hydrogen from steam methane reforming, autothermal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt.

Der in entsprechenden Verfahren gewonnene, sogenannte Rohwasserstoff mit einem Wasserstoffgehalt von typischerweise 97 bis 99%, kann nur in bestimmten Fällen direkt als Einsatzstoff für nachfolgende Prozesse verwendet werden. Häufig muss dieser Rohwasserstoff weiter aufgereinigt werden. Dies kann insbesondere mittels einer Druckwechseladsorption (Wasserstoff-PSA) erfolgen. Ein Restgas aus einer entsprechenden PSA enthält dann sämtlichen noch nicht umgesetzten oder abgetrennten Kohlenstoffe und wird meist teilweise oder vollständig als Brenngas verwendet. Dadurch wird im Regelfall eine gewisse Menge Kohlendioxid emittiert, so dass übliche Verfahren dieser Art insgesamt nur eine Kohlenstoffabtrennrate (engl. Carbon Capture Rate, CCR) von etwa 95 bis 96% erreichen.

Es besteht der Bedarf nach Verfahren und Anlagen zur Herstellung von blauem Wasserstoff, mittels derer sich höhere Kohlenstoffabtrennraten erreichen lassen.

### Offenbarung der Erfindung

Es werden ein Verfahren und eine Anlage mit den Merkmalen der unabhängigen Ansprüche vorgeschlagen. Ausgestaltungen sind Gegenstand der abhängigen Ansprüche und der nachfolgenden Beschreibung.

Aspekte der vorliegenden Erfindung umfassen, ein Restgas aus einer Druckwechseladsorption, wie sie in entsprechenden Verfahren wie eingangs erläutert und auch in hier vorgeschlagenen Ausgestaltungen eingesetzt wird, nicht direkt als Brennstoff zu nutzen, sondern zuvor einen weiteren Aufbereitungsschritt mittels einer Membrantrennung vorzusehen.

Der Membrantrennung wird das Restgas oder ein Teil hiervon oder ein unter Verwendung des Restgases oder eines Teils hiervon gebildetes Gasgemisch zugeführt, wobei die Bildung dieses Gasgemischs, falls in entsprechenden Ausgestaltungen vorgesehen, eine Kohlendioxidabtrennung umfassen kann.

In der Membrantrennung können ein ein Großteil der kohlenstoffbasierten Komponenten in ein Retentat der Membrantrennung abgetrennt und ein kohlenstoffarmes Permeat erzeugt werden. Das kohlenstoffarme Permeat kann in hier vorgeschlagenen Ausgestaltungen entweder stromauf der Druckwechseladsorption in das Verfahren zurückgeführt (nachfolgend auch als "Alternative 1" bezeichnet) oder direkt als Brenngas verwendet werden (nachfolgend auch als "Alternative 2" bezeichnet). Das kohlenstoffhaltige Retentat kann zurück in den Hauptprozess (z.B. partielle Oxidation, autotherme Reformierung, Dampfreformierung) geführt werden, wodurch der Kohlenstoff im Wesentlichen vollständig umgesetzt wird.

Bei Alternative 1 wird beispielsweise nur der Produktwasserstoff höchster Reinheit aus der Druckwechseladsorption als Brenngas verwendet, wodurch Abtrennraten von mehr als 98,5% erreicht werden können. Bei Alternative 2 können aufgrund der Verbrennung des Permeats "nur" Abtrennraten von ca. 97,5 bis 99,9% erreicht werden, deren Höhe insbesondere vom Restkohlenstoffgehalt des unterfeierten Permeats abhängt. Beide Alternativen können mit allen gängigen Kohlendioxidabtrennprozessen kombiniert werden. Sie erfordern jeweils zusätzliche Maschinen wie einen Restgaskompressor und, je nach Alternative, einen Retentatkompressor und/oder einen Permeatkompressor.

Eine Kohlendioxidabtrennung ist, wie für die Herstellung von blauem Wasserstoff bekannt und bereits angesprochen, Teil des vorgeschlagenen Verfahrens. Die Kohlendioxidabtrennung kann stromauf der Druckwechseladsorption und/oder stromab hiervon vorgesehen sein, wobei lediglich zur besseren Bezugnahme nachfolgend von einer "stromaufwärtigen" und einer "stromabwärtigen" Kohlendioxidabtrennung die Rede ist und sich diese Angaben insbesondere auf die Positionierung zueinander und in Bezug auf eine Druckwechseladsorption beziehen. Es versteht sich in jedem Fall, dass eine Kohlendioxidabtrennung keine vollständige Entfernung von Kohlendioxid darstellen muss.

Bei einer Realisierung der Kohlendioxidabtrennung stromauf der Druckwechseladsorption wird das Synthesegas, oder ein Teil hiervon, der stromaufwärtigen Kohlendioxidabtrennung zugeführt und ein in der Kohlendioxidabtrennung gebildetes, gegenüber dem Synthesegas an Kohlendioxid abgereichertes und an Wasserstoff angereichertes Gasgemisch, oder ein Teil hiervon, der Druckwechseladsorption unterworfen. Bei einer Realisierung der Kohlendioxidabtrennung stromab der Druckwechseladsorption wird das Restgas der Druckwechseladsorption, oder ein Teil hiervon, der stromabwärtigen Kohlendioxidabtrennung zugeführt und ein in der stromabwärtigen Kohlendioxidabtrennung gebildetes, gegenüber dem Restgas an Kohlendioxid abgereichertes und an Wasserstoff angereichertes Gasgemisch, oder ein Teil hiervon, wird der Membrantrennung unterworfen.

Vor einer ausführlichen Beschreibung der Merkmale von Ausgestaltungen der vorliegenden Erfindung werden grundlegende Begriffe und deren Bedeutung, die diesen in der vorliegenden Beschreibung beigelegt wird, erläutert.

Die Druckwechseladsorption basiert auf physikalischen Adsorptionsphänomenen, wobei leicht flüchtige Verbindungen mit geringer Polarität wie Wasserstoff oder Helium im Vergleich zu Molekülen wie Kohlendioxid, Kohlenmonoxid, Stickstoff und Kohlenwasserstoffen praktisch nicht adsorbierbar sind. Die zuletzt genannten Komponenten können aufgrund ihrer unterschiedlichen Adsorptionskräfte getrennt werden. Druckwechseladsorptionsverfahren arbeiten zwischen zwei Druckstufen. Die Adsorption erfolgt bei einem vergleichsweise hohen Adsorptionsdruck, während derer ein von den adsorbierten Komponenten befreites Gas oder Gasgemisch aus der Druckwechseladsorption ausgeführt wird. Dieses wird hier auch als "Hochdruckstrom" oder "Produktgas" bezeichnet. Die Desorption erfolgt dagegen bei einem vergleichsweise niedrigen Desorptionsdruck, wobei ein hier als "Niederdruckstrom" oder "Restgas" bezeichnetes Gas oder Gasgemisch bereitgestellt wird.

Eine Druckwechseladsorption, in der die Desorption auf einem unteratmosphärischen Druckniveau erfolgt, und die in Ausgestaltungen zum Einsatz kommen kann, wird auch als Vakuumdruckwechseladsorption (VPSA) bezeichnet. Adsorbentien, die im Rahmen der Erfindung zum Einsatz kommen können, sind dem Fachmann bekannt.

Bei der Druckwechseladsorption werden typischerweise mehrere, parallel geschaltete Druckbehälter eingesetzt, die mit einem entsprechenden Adsorbens befüllt sind. Mittels Verbindungsleitungen und entsprechenden Regelventilen kann jeweils mindestens einer der Druckbehälter auf dem Adsorptionsdruck mit dem Einsatzgas, hier dem wasserstoffhaltigen Synthesegas aus den stromaufwärtigen Verfahrensschritten, durchströmt und auf diese Weise ein Hochdruckstrom gebildet werden. Ein oder mehrere weitere Druckbehälter werden während dieser Zeit unter Erhalt des Niederdruckstroms regeneriert. Die Druckwechseladsorption stellt sich daher nach außen als kontinuierlicher Prozess dar, während es sich intern um einen diskontinuierlichen Prozess handelt, der aus einer Reihe von parallel ablaufenden Sequenzen besteht.

Bei Membrantrennverfahren wird eine für Komponenten eines Gasgemischs mehr oder weniger selektiv durchlässige Membran als Trennelement verwendet. Die Membran bildet eine selektive Barriere zwischen zwei Phasen, dem Einsatz und dem sogenannten Permeat. Komponenten mit hoher Permeanz, d.h. Fähigkeit, die Membran zu durchdringen, können die Membran passieren und sammeln sich auf der Permeatseite, während die anderen Komponenten mit niedriger Permeanz auf der Einsatzseite der Membran verbleiben und das sogenannte Retentat bilden. Bei Membrantrennverfahren ergibt sich ein Druckabfall über die Membran, so dass das Permeat als Niederdruckstrom gewonnen wird (und vorliegend entsprechend bezeichnet wird), wohingegen auf der Einsatzseite ein Hochdruckstrom anfällt (und vorliegend entsprechend bezeichnet wird). Die Begriffe "Hochdruck" und "Niederdruck" sind relativ zueinander zu verstehen.

Membranen für Membrantrennverfahren können aus verschiedenen Materialien hergestellt werden, z. B. aus Polymeren und Keramik. Ihr Material, ihre Struktur und ihre Homogenität bestimmen die Eigenschaften der Membran, die im Wesentlichen in der Durchlässigkeit sowie der physikalischen und chemischen Stabilität bestehen. Die in Membrantrennverfahren verwendeten Membranen können in einer geschlossenen Einheit angeordnet sein, die als Modul oder Kartusche bezeichnet wird. Solche Module können in Form, Packungsdichte und Durchflusskonfiguration stark variieren. Die treibende Kraft in der Membrantrennung ist der Partialdruckunterschied. Da sich auch die Temperatur auf die Leistung der Membranen auswirkt, sind Betriebsdruck und Temperatur die Schlüsselfaktoren für den Membranbetrieb.

Generell soll hier unter einer "Bereitstellung" eines bestimmten Stoffstroms "unter Verwendung" eines anderen Stoffstroms jegliche Art der Bereitstellung verstanden werden, beispielsweise auch lediglich ein Führen eines entsprechenden Stoffstroms zu einem anderen Verfahrensschritt, also eine Bereitstellung ohne stoffliche, physikalische oder Mengenveränderung. Generell enthält ein unter Verwendung eines ersten Stoffstroms bereitgestellter zweiter Stoffstrom im hier zugrunde gelegten Verständnis zumindest einige in dem ersten Stoffstrom enthaltene oder aus diesem erhaltene Komponenten. Ein in diesem Sinne bereitgestellter zweiter Stoffstrom kann aus dem ersten Stoffgemisch beispielsweise durch Abtrennen oder Abzweigen eines Teils oder einer oder mehrerer Komponenten, Anreichern oder Abreichern bezüglich einer oder mehrerer Komponenten, chemisches oder physikalisches Umsetzen einer oder mehrerer Komponenten, Erwärmen, Abkühlen, Druckbeaufschlagen, Entspannen und dergleichen erhalten werden.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff") ergebenden obligatorischen Bestandteilen weitere Komponenten enthalten sein können sind, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01 % dieser Komponenten in Summe oder als Einzelwerte enthält.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Das hier vorgeschlagene Verfahren zur Herstellung eines wasserstoffreichen Produktgases umfasst, dass ein Reaktionseinatz unter Verwendung eines oder mehrerer Umsetzungsschritte zu einem Synthesegas umgesetzt wird, wobei das Synthesegas oder ein Teil hiervon, oder ein Gasgemisch, das unter Einsatz einer stromaufwärtigen Kohlendioxidabtrennung aus dem Synthesegas oder einem Teil hiervon gebildet wird, als Druckwechseladsorptionseinsatz einer Druckwechseladsorption unterworfen wird, wobei unter Verwendung der Druckwechseladsorption das Produktgas und ein Restgas gebildet werden, und wobei das Restgas oder ein Teil hiervon, oder ein Gasgemisch, das unter Verwendung einer stromabwärtigen Kohlendioxidabtrennung aus dem Restgas oder einem Teil hiervon gebildet wird, als Membrantrenneinsatz unter Erhalt eines Permeats und eines Retentats einer Membrantrennung unterworfen wird.

Wie bereits erwähnt, kann das Retentat oder ein Teil hiervon in den einen Umsetzungsschritt oder in zumindest einen der mehreren Umsetzungssschritte zurückgeführt werden. Auf diese Weise ist, wie ebenfalls erwähnt, in einer entsprechenden Ausgestaltung der vorliegenden Erfindung eine vorteilhafte Umsetzung im Wesentlichen allen kohlenstoffhaltigen Einsatzstoffs möglich, so dass die Gesamtausbeute verbessert werden kann.

Der Reaktionseinatz ist kohlenstoffhaltig, d.h. erweist insbesondere kohlenstoffhaltige Verbindungen auf, die sich in an sich bekannter Weise zu Synthesegas umsetzen lassen. Ein Synthesegas kann mittels des oder der Umsetzungsschritte in seinen Gehalten an Wasserstoff und Kohlendioxid (sowie Kohlenmonoxid) angepasst werden, indem eine Wassergashift zum Einsatz kommt. Das Gasgemisch, das in bestimmten Ausgestaltungen unter Einsatz der stromaufwärtigen Kohlendioxidabtrennung aus dem Synthesegas oder einem Teil hiervon gebildet wird, ist gegenüber dem Synthesegas an Kohlendioxid ab- und an Wasserstoff angereichert. Das Produktgas der Druckwechseladsorption ist insbesondere reich an Wasserstoff im oben genannten Sinn, wohingegen das Restgas der Druckwechseladsorption gegenüber dem Druckwechseladsorptionseinsatz, an Wasserstoff ab- und an Kohlendioxid angereichert ist. Wird in hier vorgeschlagenen Ausgestaltungen unter Verwendung einer stromabwärtigen Kohlendioxidabtrennung aus dem Restgas oder einem Teil hiervon ein Gasgemisch gebildet, das der Membrantrennung unterworfen wird, ist dieses insbesondere gegenüber dem Restgas an Kohlendioxid abgereichert und an Wasserstoff angereichert.

Insbesondere kann oder können in einem Synthesegas eine oder mehrere andere kohlenstoffhaltige Verbindungen enthalten sein, beispielsweise nicht umgesetzte Kohlenwasserstoffe oder Kohlenmonoxid, insbesondere Methan. Diese eine oder mehreren anderen kohlenstoffhaltigen Verbindungen gehen zumindest zu einem überwiegenden Anteil in das Restgas der Druckwechseladsorption über. In der Membrantrennung gelangt oder gelangen diese zumindest zu einem überwiegenden Anteil in das Retentat.

In einer Ausgestaltung oder Gruppe von Ausgestaltungen der vorliegenden Erfindung, die der bereits oben erwähnten Alternative 1 entspricht bzw. entsprechen, kann das Permeat oder ein Teil hiervon stromauf der Druckwechseladsorption und stromab des einen oder der mehreren Umsetzungsschritte in das Verfahren zurückgeführt werden. Hierdurch kann der enthaltene Wasserstoff im Wesentlichen in eine hochreine Wasserstoffraktion, d.h. das erfindungsgemäß bereitgestellte wasserstoffreiche Produktgas, überführt werden, so dass dieses, nicht aber das noch Kohlenstoff enthaltende Retentat, verbrannt wird. Auf diese Weise kann die Kohlenstoffabtrennrate auf sehr hohe Werte gesteigert werden. Insbesondere kann das Verfahren in einer entsprechenden Ausgestaltung mit einer Kohlenstoffabtrennrate von insgesamt mehr als 99,5% betrieben werden, d.h. die Kohlenstoffabtrennung kann im Wesentlichen vollständig sein. Die Kohlenstoffabtrennrate bezeichnet dabei im Wesentlichen den Kohlenstoff, der als Kohlendioxid abgetrennt und beispielsweise in eine unterirdische Lagerstätte verpresst werden kann.

In einer alternativen Ausgestaltung oder Gruppe von Ausgestaltungen der vorliegenden Erfindung, die der bereits oben erwähnten Alternative 2 entspricht bzw. entsprechen, kann das Permeat oder ein Teil hiervon einer thermischen Umsetzung zugeführt werden. In dieser Ausgestaltung kann auf eine aufwendige, und typischerweise eine Rückverdichtung erfordernde, Rückführung verzichtet werden. Dennoch lassen sich auch in einer derartigen Ausgestaltung der vorliegenden Erfindung verglichen mit dem Stand der Technik noch ausgesprochen hohe Kohlenstoffabtrennraten erzielen, die in Ausgestaltungen der vorliegenden Erfindung in einem Bereich von 98,5 bis 99,0% liegen können.

Die vorliegende Erfindung kann grundsätzlich mit allen bekannten Prozessen zur Herstellung von Synthesegas verwendet werden, so dass der eine Umsetzungsschritt oder einer der mehreren Umsetzungsschritte gemäß entsprechender Ausgestaltungen der vorliegenden Erfindung eine autotherme Reformierung, eine partielle Oxidation und/oder eine Dampfreformierung umfassen kann. Auf diese Weise kann auf bewährte und besonders geeignete Verfahren zurückgegriffen werden, die durch den Fachmann in der jeweils günstigsten Weise ausgewählt werden können.

Zur Erhöhung der Wasserstoffausbeute kann vorgesehen sein, dass einer der mehreren Umsetzungsschritte eine Wassergasshiftreaktion umfasst, mittels welcher Kohlenmonoxid zu Wasserstoff und Kohlendioxid umgesetzt werden kann. Die Wassergasshiftreaktion bzw. entsprechende Verfahrensschritte und Reaktoren sind dabei der autothermen Reformierung, partiellen Oxidation und/oder Dampfreformierung nachgeschaltet. Der Einsatz einer Wassergasshiftreaktion vereinfacht die Kohlenstoffabtrennung in Form von Kohlendioxid und erhöht die Wasserstoffausbeute.

Der im Rahmen der vorliegenden Erfindung verwendete kohlenstoffhaltige Reaktionseinatz kann insbesondere unter Verwendung von Erdgas gebildet werden, das in geeigneter Weise aufbereitet wird, beispielsweise durch Entfernung von störenden Komponenten wie Sauergasen. Alternativ können auch andere, insbesondere gasförmige, kohlenstoffhaltige Reaktionseinsätze verwendet werden, beispielsweise Biogas, Vergasungsgas aus Kohle, Abfällen oder dergleichen, oder Restgase aus Raffinerieprozessen.

Die Kohlendioxidabtrennung kann in Ausgestaltungen der vorliegenden Erfindung beliebige Varianten der Kohlendioxidabtrennung umfassen, beispielsweise eine absorptive Wäsche unter Verwendung von Waschmitteln wie Amin- oder Laugelösungen oder Kombinationen hiervon.

Die erfindungsgemäße Anlage zur Herstellung eines wasserstoffreichen Produktgases ist dafür eingerichtet, einen Reaktionseinatz unter Verwendung eines oder mehrerer Umsetzungsschritte zu einem Synthesegas umzusetzen und das Synthesegas oder einen Teil hiervon, oder ein Gasgemisch, das unter Einsatz einer Kohlendioxidabtrennung aus dem Synthesegas oder einem Teil hiervon gebildet wird, als Druckwechseladsorptionseinsatz einer Druckwechseladsorption zu unterwerfen. Die Anlage weist Mittel auf, die dafür eingerichtet sind, unter Verwendung der Druckwechseladsorption das Produktgas und ein Restgas zu bilden, und das Restgas oder einen Teil hiervon, oder ein Gasgemisch, das unter Verwendung einer Kohlendioxidabtrennung aus dem Restgas oder einem Teil hiervon gebildet wird, als Membrantrenneinsatz unter Erhalt eines Permeats und eines Retentats einer Membrantrennung zu unterwerfen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 eine Anlage gemäß einer Ausgestaltung der Erfindung veranschaulicht, und
Figur 2 eine Anlage gemäß einer Ausgestaltung der Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

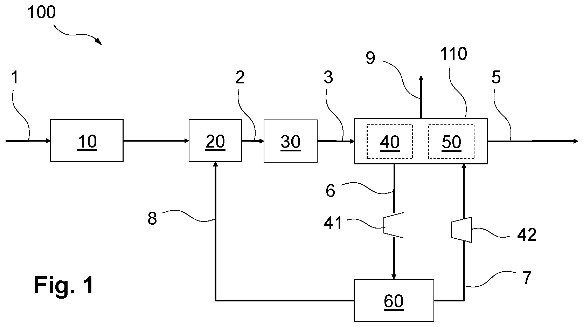

In Figur 1 ist eine Anlage gemäß einer Ausgestaltung der vorliegenden Erfindung veranschaulicht und insgesamt mit 100 bezeichnet.

Dem Verfahren 100, das zur Herstellung eines wasserstoffreichen Produktgases 5 dient, wird ein kohlenstoffhaltiger Reaktionseinatz 1 zugeführt, beispielsweise Erdgas oder ein anderer Einsatz wie zuvor erläutert. Dieser wird in dem hier veranschaulichten Beispiel unter Verwendung mehrerer Umsetzungsschritte 10, 20 und 30 zu einem Wasserstoff und Kohlendioxid enthaltenden Synthesegas 3 umgesetzt.

Genauer kann dabei ein Verfahrensschritt 20 bzw. eine Gruppe von Verfahrensschritten 20 zum Einsatz kommen, im Zuge derer eine partielle Oxidation, autotherme Reformierung oder Dampfreformierung erfolgt, wie zuvor erläutert, wobei ein Wasserstoff, Kohlendioxid und Kohlenmonoxid enthaltendes (Roh-) Synthesegas 2 erhalten wird. Dieses wird im dargestellten Beispiel in einem Verfahrensschritt 30 bzw. einer Gruppe von Verfahrensschritten 30 einer Wassergasshiftreaktion unterworfen, wodurch das Synthesegas 3 mit einem erhöhten Wasserstoff- und einem verringerten Kohlenmonoxidgehalt verglichen mit dem (Roh-)Synthesegas 2 erhalten wird. Stromauf des Verfahrensschritts 20 oder der Gruppe von Verfahrensschritten 20 kann oder können ein Verfahrensschritt 10 oder eine Gruppe von Verfahrensschritten 10 vorgesehen sein, beispielsweise eine Präreformierung an sich bekannter Art.

In dem Verfahren 100 sind eine Kohlendioxidabtrennung 50 und eine Druckwechseladsorption 40 vorgesehen, die in einem Block 110 veranschaulicht sind. Das Synthesegas 3 kann dabei unter Erhalt eines gegenüber dem Synthesegas 3 an Kohlendioxid abgereicherten und Wasserstoff und Kohlendioxid enthaltenden Gasgemischs erst der Kohlendioxidabtrennung 50 unterworfen werden. In diesem Fall wird, wie hier nicht im Detail veranschaulicht, dieses Gasgemisch als Druckwechseladsorptionseinsatz der Druckwechseladsorption 40 zugeführt. Umgekehrt kann das Synthesegas 3 aber auch zuerst der Druckwechseladsorption 40 unterworfen und erst ein dort gebildetes Restgas der Kohlendioxidabtrennung 50 unterworfen werden. Das in der Kohlendioxidabtrennung 50 abgetrennte Kohlendioxid ist in Form eines Stoffstroms 9 veranschaulicht und kann beispielsweise in eine unterirdische Lagerstätte verpresst werden. Das Restgas oder ein aus dem Restgas in der Kohlendioxidabtrennung 40 gebildetes Gasgemisch ist mit 6 bezeichnet

Wie weiter veranschaulicht, wird das Restgas 6, oder ein unter Verwendung einer Kohlendioxidabtrennung 50 hieraus gebildetes Gasgemisch in dem hier veranschaulichten Beispiel unter Erhalt eines gegenüber dem jeweiligen Ausgangsgasgemisch an Kohlendioxid abgereicherten Permeats 7 und eines an Kohlendioxid angereicherten Retentats 8 einer Membrantrennung 60 unterworfen. Es wird dazu mittels eines Verdichters 41 auf ein Druckniveau von typischerweise mehr als 31 bar verdichtet.

Das Retentat 8, das auf einem Druckniveau von typischerweise mehr als 30 bar vorliegt, wird, wie hier veranschaulicht, nach stromauf der Umsetzungssschritte 20 und 30 zurückgeführt, so dass insbesondere darin enthaltene Kohlenwasserstoffe zu weiterem Wasserstoff umgesetzt werden können. Das Permeat 7 wird mittels eines geeigneten Verdichters 42 von einem Druckniveau über 5 bar aufgedrückt und insbesondere in die Druckwechseladsorption 40 rückgespeist.

In dem in Figur 1 veranschaulichten Beispiel einer erfindungsgemäßen Anlage 100 wird das Permeat 7 stromauf der Druckwechseladsorption 40 und stromab der Umsetzungsschritte 20, 30 in das Verfahren zurückgeführt, so dass der enthaltene Wasserstoff in das wasserstoffreiche Produktgas 5 überführt werden kann. Hierdurch lassen sich besonders hohe Kohlenstoffabtrennraten erreichen. Das Produktgas 5 kann ohne oder mit geringen Kohlendioxidemissionen verfeuert werden.

In Figur 2 ist eine Anlage gemäß einer weiteren Ausgestaltung der vorliegenden Erfindung veranschaulicht und insgesamt mit 200 bezeichnet.

Im Gegensatz zu dem in Figur 1 veranschaulichten Beispiel wird das Restgas 6 hier anders verwertet. Es kann insbesondere mittels eines Verdichters 41 auf ca. 10 bis 15 bar aufgedrückt werden. Ein Teil 6a kann direkt einer thermischen Umsetzung 70 zugeführt werden. Ein weiterer Anteil 6b wird der Membrantrennung 60 zugeführt, wo auf einem Druckniveau von ca. 1,5 bar ein Permeat 7 gebildet wird. Auch dieses kann der thermischen Umsetzung 70 zugeführt werden. Ein nochmals weiterer Anteil 6c kann mittels eines Rückführverdichters 44 auf einen Druck von über 30 bar aufgedrückt werden und unter Umgehung der Membrantrennung 60 rückgeführt werden. Dies gilt auch für Retentat 8.

## Patentansprüche

1. Verfahren (100, 200) zur Herstellung eines wasserstoffreichen Produktgases (5), bei dem ein Reaktionseinatz (1) unter Verwendung eines oder mehrerer Umsetzungsschritte (10, 20, 30) zu einem Synthesegas (3) umgesetzt wird, wobei das Synthesegas (3) oder ein Teil hiervon, oder ein Gasgemisch, das unter Einsatz einer Kohlendioxidabtrennung (50) aus dem Synthesegas (3) oder einem Teil hiervon gebildet wird, einer Druckwechseladsorption (40) unterworfen wird, wobei unter Verwendung der Druckwechseladsorption (40) das Produktgas (5) und ein Restgas (6) gebildet werden, und wobei das Restgas (6) oder ein Teil hiervon, oder ein Gasgemisch, das unter Verwendung einer Kohlendioxidabtrennung (50) aus dem Restgas (6) oder einem Teil hiervon gebildet wird, unter Erhalt eines Permeats (7) und eines Retentats (8) einer Membrantrennung (60) unterworfen wird.

2. Verfahren nach Anspruch 1, bei dem der Reaktionseinatz (1) kohlenstoffhaltig ist, das Gasgemisch, das unter Einsatz der Kohlendioxidabtrennung (50) aus dem Synthesegas (3) oder einem Teil hiervon gebildet wird, gegenüber dem Synthesegas (3) an Kohlendioxid ab- und an Wasserstoff angereichert ist, das Produktgas (5) der Druckwechseladsorption (50) reich an Wasserstoff ist, das Restgas (5) gegenüber dem Synthesegas (3) oder dem unter Einsatz der Kohlendioxidabtrennung (40) aus dem Synthesegas (3) oder einem Teil hiervon gebildeten Gasgemisch an Wasserstoff ab- und an Kohlendioxid angereichert ist, und das in der Kohlendioxidabtrennung (40) aus dem Restgas oder einem Teil hiervon gebildete Gasgemisch, das der Membrantrennung (60) unterworfen wird, an Kohlendioxid abgereichert und an Wasserstoff angereichert ist.

3. Verfahren nach Anspruch 1 oder 2, bei dem das Retentat (8) oder ein Teil hiervon in den einen Umsetzungsschritt (20, 30) oder in zumindest einen der mehreren Umsetzungssschritte (20, 30) zurückgeführt wird.

4. Verfahren nach einem der vorstehenden Ansprüche, bei dem das Permeat (7) oder ein Teil hiervon stromauf der Druckwechseladsorption (40) und stromab des einen oder der mehreren Umsetzungsschritte (10, 20) in das Verfahren zurückgeführt wird.

5. Verfahren nach Anspruch 4, das mit einer Kohlenstoffabtrennrate von insgesamt mehr als 98,5% betrieben wird.

6. Verfahren nach Anspruch 1 oder 2, bei dem das Permeat (7) oder ein Teil hiervon einer thermischen Umsetzung (70) zugeführt wird.

7. Verfahren nach Anspruch 5, das mit einer Kohlenstoffabtrennrate von insgesamt 97 bis 99,9% betrieben wird.

8. Verfahren nach einem der vorstehenden Ansprüche, bei dem der eine Umsetzungsschritt (20) oder einer der mehreren Umsetzungsschritte (20, 30) eine autotherme Reformierung, eine partielle Oxidation und/oder eine Dampfreformierung umfasst.

9. Verfahren nach einem der vorstehenden Ansprüche, bei dem einer der mehreren Umsetzungsschritte (10, 20) eine Wassergasshiftreaktion umfasst.

10. Verfahren nach einem der vorstehenden Ansprüche, bei dem der kohlenstoffhaltige Reaktionseinatz (1) unter Verwendung von Erdgas gebildet wird.

11. Verfahren nach einem der vorstehenden Ansprüche, bei dem die Kohlendioxidabtrennung (50) eine absorptive Wäsche umfasst.

12. Anlage zur Herstellung eines wasserstoffreichen Produktgases (5), die dafür eingerichtet ist, einen Reaktionseinatz (1) unter Verwendung eines oder mehrerer Umsetzungsschritte (20, 30) zu einem Synthesegas (3) umzusetzen und das Synthesegas (3) oder einen Teil hiervon, oder ein Gasgemisch, das unter Einsatz einer Kohlendioxidabtrennung (50) aus dem Synthesegas oder einem Teil hiervon gebildet wird, als Druckwechseladsorptionseinsatz einer Druckwechseladsorption (40) zu unterwerfen, wobei die Anlage Mittel aufweist, die dafür eingerichtet sind, unter Verwendung der Druckwechseladsorption (40) das Produktgas (5) und ein Restgas (6) zu bilden, und das Restgas (6) oder einen Teil hiervon, oder ein Gasgemisch, das unter Verwendung einer Kohlendioxidabtrennung (50) aus dem Restgas (6) oder einem Teil hiervon gebildet wird, als Membrantrenneinsatz unter Erhalt eines Permeats (7) und eines Retentats (8) einer Membrantrennung (60) zu unterwerfen.

13. Anlage nach Anspruch 12, die zur Durchführung eines Verfahrens nach einem der Ansprüche 1 bis 11 eingerichtet ist.
